Europäisches Patentamt

European Patent Office

Office européen des brevets

(19)

(11) EP 0 835 422 B1

# (12) FASCICULE DE BREVET EUROPEEN

(45) Date de publication et mention
de la délivrance du brevet:
**09.06.1999 Bulletin 1999/23**

(21) Numéro de dépôt: **96922828.7**

(22) Date de dépôt: **18.06.1996**

(51) Int Cl.⁶: **G01B 1/00**, G01B 7/06

(86) Numéro de dépôt international:
**PCT/EP96/02627**

(87) Numéro de publication internationale:
**WO 97/01739 (16.01.1997 Gazette 1997/04)**

(54) **PROCEDE ET INSTALLATION POUR LA MESURE D'EPAISSEUR DE COUCHE CONDUCTRICE NON FERROMAGNETIQUE SUR UN SUBSTRAT CONDUCTEUR FERROMAGNETIQUE**

VERFAHREN UND EINRICHTUNG ZUR DICKENMESSUNG VON LEITENDEN NICHT FERROMAGNETISCHEN SCHICHTEN AUF EINEM LEITENDEN FERROMAGNETISCHEN SUBSTRAT

METHOD AND APPARATUS FOR MEASURING THE THICKNESS OF A NON-FERROMAGNETIC CONDUCTIVE LAYER ON A FERROMAGNETIC CONDUCTIVE SUBSTRATE

(84) Etats contractants désignés:
**BE DE FR GB IT LU**

(30) Priorité: **29.06.1995 EP 95201784**

(43) Date de publication de la demande:
**15.04.1998 Bulletin 1998/16**

(73) Titulaire: **Bekaert Naamloze Vennootschap
8550 Zwevegem (BE)**

(72) Inventeurs:
• **DE HALLEUX, Benoit
B-1300 Wavre (BE)**
• **DE LIMBURG STIRUM, Bruno
B-3040 Huldenberg (BE)**

(74) Mandataire: **Van Malderen, Joelle et al
Office Van Malderen,
Place Reine Fabiola 6/1
1083 Bruxelles (BE)**

(56) Documents cités:
| | |
|---|---|
| EP-A- 0 321 111 | FR-A- 2 534 015 |
| US-A- 3 693 075 | US-A- 5 341 678 |
| US-A- 5 453 689 | US-A- 5 461 313 |

• **REVIEW OF SCIENTIFIC INSTRUMENTS, vol. 63, no. 6, Juin 1992, NY,US, pages 3455-3465, XP000301850 J.C. MOULDER ET AL.: "Thickness and conductivity of metallic layers from Eddy current measurements." cité dans la demande**
• **PATENT ABSTRACTS OF JAPAN vol. 13, no. 64 (P-827), 14 Février 1989 & JP,A,63 253212 (TOPPAN PRINTING CO. LTD.), 20 Octobre 1988,**

EP 0 835 422 B1

## Description

### Objet de l'invention.

La présente invention concerne un procédé et une installation de mesure par courants de Foucault de l'épaisseur d'une couche de revêtement en matériau conducteur non ferromagnétique sur un substrat en matériau conducteur ferromagnétique.

### Arrière-plan technologique à la base de l'invention.

Les métaux recouverts sont utilisés dans une grande variété d'applications technologiques. Le rôle du recouvrement est d'améliorer les propriétés d'emploi du produit comme, par exemple, la tenue à la corrosion généralisée, l'endurance en fatigue, la résistance électrique de contact, l'isolation thermique etc. Comme produits, on peut citer, à titre d'exemple et sans caractère limitatif, les aciers galvanisés, les boulons cadmiés, les produits conducteurs ferromagnétiques recouverts d'une pellicule d'argent ou d'or ou d'un autre métal précieux.

Pour garantir que la peau de recouvrement ait l'effet désiré sur les propriétés d'emploi du produit, il faut être à même de contrôler avec précision les caractéristiques du revêtement à l'origine de l'effet désiré. Il faut par exemple être capable de déterminer avec précision l'épaisseur de la peau de recouvrement, celle-ci pouvant aller de valeurs très faibles (par exemple, 1/10 ou 1/100 de micron) à des valeurs relativement importantes (par exemple, 1 mm). On doit parfois également déterminer la conductivité électrique $\sigma$. Enfin, il est parfois aussi nécessaire de contrôler l'homogénéité de la couche de recouvrement et éventuellement son intégrité. Il est avantageux que toutes ces mesures puissent être réalisées sans contact avec la pièce pour pouvoir, par exemple, introduire ces techniques de contrôle on line dans le processus de production.

De nombreux procédés ont été développés et appliqués pour réaliser la mesure de l'épaisseur d'une couche déposée sur un support conducteur.

Des procédés industriels chimiques sont connus pour déterminer l'épaisseur d'un revêtement d'un produit. Il convient de noter que ces procédés présentent l'inconvénient majeur d'être destructifs, et ne peuvent être de ce fait appliqués on line sur les lignes de production.

D'autres procédés tels que l'utilisation d'ultrasons ou la mesure de l'absorption ou la diffraction de rayonnements ionisants ont été proposés pour déterminer l'épaisseur d'une couche mince déposée sur un substrat.

D'autres procédés réalisés par la mesure des courants de Foucault ont également été décrits dans la littérature scientifique ou dans des brevets.

En particulier, le document "Thickness and Conductivity of Metallic Layers from Eddy Current Measurements", Rev. Sci. Instrum. 63 (6), juin 1992, pp. 3455-3465 ainsi que le document FR-A-83 15 587 décrivent des procédés de mesure de recouvrement non ferromagnétique sur des substrats non ferromagnétiques.

Le document "Utilisation de l'inversion de modèles courants de Foucault pour mesure de l'épaisseur de zinc sur aciers galvanisés", comptes-rendus de la 6ème Conférence sur les contrôles non destructifs, Nice, octobre 1994, pp. 1325-1329 ainsi que les brevets EP-A-0 179 720 et FR-A-83 12 980 décrivent des procédés et dispositifs de mesure d'épaisseur de couches métalliques minces déposées sur un support conducteur.

Néanmoins, tous ces procédés sont sensibles à la qualité du substrat conducteur ferromagnétique comme par exemple la conductivité et /ou la perméabilité.

En outre, pour obtenir des mesures fiables, il est nécessaire d'effectuer dans tous les cas un étalonnage pour permettre la mesure.

Tous les documents repris ci-dessus décrivent des procédés qui n'exploitent qu'une seule donnée lors de la mesure comme par exemple l'inductance, la résistance ou encore l'angle entre l'inductance et la résistance.

Toutes les méthodes existantes de mesure d'épaisseur de couches conductrices revêtant des substrats conducteurs présentent donc des inconvénients qui en limitent le domaine d'application, qui sont causes d'imprécision de mesure et qui, lorsque les méthodes sont applicables, obligent à un contrôle très sévère de l'invariance des caractéristiques géométriques, électriques et magnétiques de la matière. La maîtrise rigoureuse de la constance de ces dernières est pratiquement impossible dans un environnement industriel.

### Buts de l'invention.

La présente invention se propose d'apporter un procédé et une installation permettant d'éviter les inconvénients mentionnés ci-dessus. Elle introduit un procédé de mesure de l'épaisseur d'une couche conductrice sur un substrat conducteur ferromagnétique.

La présente invention vise à proposer un procédé qui s'accommode de variation de conductivité et de perméabilité du substrat. Le procédé s'applique à tous les produits en matériau conducteur ferromagnétique recouverts d'une couche en matériau conducteur non-ferromagnétique.

Des applications particulièrement avantageuses de l'invention résident dans la mesure de l'épaisseur de métal électro-déposé telle qu'un revêtement d'étain, de laiton, de zinc, d'or ou d'argent sur un objet constitué d'un substrat en matériau conducteur ferromagnétique de préférence choisi parmi le groupe constitué par un fil, une tôle, un tube, un profilé, un produit plat ou encore tout objet limité par une surface cylindrique ou par une surface plane.

Parmi ces applications avantageuses, on peut citer la mesure de l'épaisseur de la couche de zinc sur un fil d'âme en acier, la mesure de l'épaisseur de la couche de zinc en surface externe et/ou en surface interne de tuyaux en acier galvanisé ainsi que dans la mesure on line de l'épaisseur de la couche de zinc dans le cas de fils, de ronds, de profilés, de tubes (couche interne ou externe), de tôles et de produits plats galvanisés à chaud ou par électrolyse.

La présente invention vise également à s'affranchir de tout étalonnage pour pouvoir mesurer directement et on-line l'épaisseur du recouvrement sur le substrat conducteur.

## Principaux éléments caractéristiques de la présente invention.

Le procédé suivant l'invention est applicable à un objet constitué d'un substrat en matériau conducteur électrique ferromagnétique recouvert d'une couche d'un revêtement conducteur électrique non ferromagnétique pour mesurer le produit conductivité de couche fois épaisseur de couche. Ledit procédé suivant l'invention consiste à placer au moins un inducteur produisant un champ magnétique variable dans un espace avoisinant l'objet, à mesurer au travers d'un détecteur constitué d'au moins une surface de détection bornée, deux grandeurs proportionnelles aux parties de la dérivée temporelle du flux magnétique créé dans la surface de détection concomitamment par l'inducteur et par l'objet, en phase et en quadrature avec un signal électrique de référence, à exploiter concomitamment deux fonctions différentes de ces deux mesures en définissant un point expérimental en prenant ces deux fonctions comme les deux grandeurs d'entrée d'un premier abaque qui ne peut pas être réduit à un abaque équivalent à une seule entrée, qui est indépendant de la conductivité de la couche et de la conductivité et de la perméabilité du substrat, mais dépendant des caractéristiques du système inducteur-objet-détecteur, du champ magnétique variable produit par l'inducteur, ledit abaque est constitué d'un réseau de courbes non sécantes correspondant chacune à une valeur différente du produit conductivité de couche fois épaisseur de couche et à déterminer sur l'abaque laquelle parmi ces courbes passe par le point correspondant à la mesure et d'en déduire la valeur du produit conductivité de couche fois épaisseur de couche.

Selon l'invention, le champ magnétique variable peut être obtenu en maintenant un inducteur immobile dans le référentiel du laboratoire et produisant un effet inducteur variable dans le temps dans l'espace au voisinage de l'objet, l'inducteur étant par exemple constitué par une bobine alimentée en courant variable ou par un électro-aimant alimenté par un courant variable. Ce dernier pouvant être, par exemple, périodique ou non, alternatif ou non (impulsionnel par exemple), sinusoïdal ou autre. On peut également produire le champ magnétique variable dans l'espace avoisinant l'objet, en produisant un champ magnétique invariable ou non dans le temps dans un référentiel en mouvement par rapport au référentiel du laboratoire comme par exemple un aimant ou une bobine solidaire d'un référentiel tournant.

Un autre avantage du procédé suivant l'invention consiste en ce que la position du point expérimental dans un second abaque à deux entrées est aussi utilisée pour déterminer le quotient conductivité du substrat sur perméabilité du substrat en exploitant ce second abaque à deux entrées superposé au premier abaque qui ne peut pas être réduit à un abaque équivalent à une seule entrée, qui est constitué d'un second réseau de courbes non sécantes correspondant chacune à une valeur différente dudit quotient, qui est indépendant de la conductivité de la couche et de la conductivité et de la perméabilité du substrat mais dépendant de la géométrie particulière de chaque système inducteur-objet-détecteur et à déterminer sur le second abaque laquelle parmi ces courbes passe par le point correspondant à la mesure et d'en déduire la valeur du quotient perméabilité du substrat sur conductivité du substrat.

Un autre aspect de l'invention consiste dans le fait qu'il est applicable en temps réel et, de ce fait, on peut envisager qu'il soit utilisé en ligne dans le but de réaliser un asservissement permettant de réguler la fabrication.

Un autre aspect de l'invention concerne une installation pour mesurer l'épaisseur d'une couche en matériau conducteur non ferromagnétique sur un objet constitué d'un substrat en matériau conducteur ferromagnétique, ledit objet défilant de manière continue à travers un dispositif de mesure comprenant un inducteur produisant un champ magnétique variable dans un espace avoisinant l'objet, un système de détection comprenant un détecteur constitué d'au moins une surface de détection bornée, l'inducteur et/ou le système de détection étant connecté à un ordinateur programmé à réaliser le procédé de mesure selon l'invention.

Une caractéristique étonnante de l'invention est la très grande précision et la très grande reproductibilité des mesures d'épaisseurs de couche qu'il est possible d'atteindre. La précision et la reproductibilité d'une mesure peuvent être meilleures que le dixième de micron et dans certains cas, que le centième de micron.

De préférence, le procédé selon l'invention exploite l'information fournie par une bobine d'excitation connue alimentée par un courant variable par exemple et sans caractère limitatif, un courant alternatif sinusoïdal ou un courant impulsionnel, placée au voisinage de l'objet conducteur ferromagnétique recouvert d'une couche de matériau conducteur non ferromagnétique, soit l'information fournie par une ou plusieurs bobines réceptrices placées au voisinage de l'objet parcouru par courants de Foucault. Les courants induits dans l'objet conducteur (courants de Foucault) se répartissent dans la couche de recouvrement et la zone adjacente de la partie ferromagnétique de l'objet. L'existence de ces courants engendre une force électromotrice dans les spires des bobines au voisinage de l'objet conducteur. La mesure exploite soit l'impédance complexe que présente la bobine d'excitation au courant variable de mesure soit dans le cas d'une bobine de réception distincte de la bobine inductrice par les variations respectives de la tension et de la phase apparaissant aux bornes de la bobine de réception soit des méthodes équivalentes. On dispose donc lors de chaque mesure de deux informations indépendantes qu'il convient d'exploiter au mieux pour tenter de résoudre le problème de la détermination de l'épaisseur de la couche de recouvrement.

Lorsque la mesure se fait par une seule bobine, ces deux informations peuvent avantageusement être présentées en assimilant le modèle physique à un circuit R-L. Pour s'affranchir autant que possible des caractéristiques propres de la bobine et ne tenir compte que des grandeurs en liaison avec les courants de Foucault qui sont générés dans l'objet soumis au contrôle, on déterminera lors de chaque mesure l'inductance normalisée **L** et la résistance normalisée **R** qui sont respectivement définies par les relations suivantes :

$$L = \frac{\omega L}{\omega L_v} \tag{1}$$

$$R = \frac{R - R_v}{\omega L_v} \tag{2}$$

- $L_v$ et $R_v$ représentent respectivement l'inductance et la résistance de la bobine inductrice placée loin de tout objet conducteur,
- $\omega$ représente la pulsation ($2\pi f$),
- L et R représentent respectivement l'inductance et la résistance de la bobine inductrice au voisinage de l'objet conducteur recouvert d'un revêtement conducteur.

Pour faciliter la compréhension de la démarche inventive, nous allons commencer par discuter le cas exemplatif et non limitatif de la mesure de l'épaisseur de la couche de zinc à l'aide d'une bobine de mesure encerclant un fil électrogalvanisé.

La solution du problème direct en utilisant le modèle exact de Dodd et Deeds conduit aux relations analytiques (3) et (4) reliant l'inductance **L** et la résistance **R** aux paramètres du modèle physique. Ceux-ci sont les sections internes et externes $S_1$, $S_2$ et la longueur 1 de la bobine cylindrique, le diamètre 2a du fil galvanisé, la fréquence f du courant de mesure, l'épaisseur e de la couche de galvanisation, la conductivité $\sigma_1$ de la couche de zinc, la conductivité $\sigma_2$ et la perméabilité relative $\mu_{r2}$ du fil d'âme en acier. Toutes ces variables apparaissent de façon explicite dans les expressions analytiques correspondant aux relations (3) et (4).

$$L = \text{fonction } (S_1, S_2, a, f, e, \sigma_1, \sigma_2, \mu_{r2}) \tag{3}$$

$$R = \text{fonction } (S_1, S_2, a, f, e, \sigma_1, \sigma_2, \mu_{r2}) \tag{4}$$

Les valeurs de la fréquence f du courant de mesure, des sections internes et externes $S_1$, $S_2$ et de la longueur 1 du solénoïde ainsi que du rayon a du fil galvanisé, peuvent être supposées connues. La détermination de l'épaisseur e de la couche de zinc demande alors la connaissance des conductivités $\sigma_1$ et $\sigma_2$ ainsi que la perméabilité $\mu_{r2}$. Nous nous trouvons donc en présence de 4 inconnues alors que nous ne disposons que de 2 équations si nous réalisons la mesure de l'impédance complexe Z à une seule fréquence. L'objet de l'invention sera de résoudre ce problème apparemment insoluble. Réaliser la mesure à deux ou plusieurs fréquences ne permet pas de lever cette indétermination car l'expérience montre que la perméabilité $\mu_{r2}$ du substrat ferromagnétique dépend de la fréquence du courant de mesure.

Les relations (5) et (6) synthétisent les résultats acquis lors de l'exploration des propriétés cachées; elles sont pratiquement exactes à partir d'une fréquence minimale qui dépend des paramètres du système physique que constitue le produit ferromagnétique recouvert d'une couche conductrice plus la bobine de mesure affectée par celui-ci. Il apparaît que les variables e, $\sigma_1$, $\mu_{r2}$ et $\sigma_2$ ne sont plus présentes individuellement dans les relations (5) et (6) mais sous forme du produit e*$\sigma_1$ et du quotient $\mu_{r2}/\sigma_2$. Les variables e*$\sigma_1$ et $\mu_{r2}/\sigma_2$ qui apparaissent dans les relations (5) et (6) sont des variables cachées. Elles n'apparaissent pas de manière explicite dans les expressions analytiques correspondant aux relations (5) et (6).

$$L = \text{fonction } (S_1, S_2, a, f, e^*\sigma_1, \mu_{r2}/\sigma_2) \qquad (5)$$

$$R = \text{fonction } (S_1, S_2, a, f, e^*\sigma_1, \mu_{r2}/\sigma_2) \qquad (6)$$

Nous disposons maintenant de 2 relations indépendantes qui nous permettent de déterminer les 2 inconnues e*$\sigma_1$ et $\mu_{r2}/\sigma_2$.

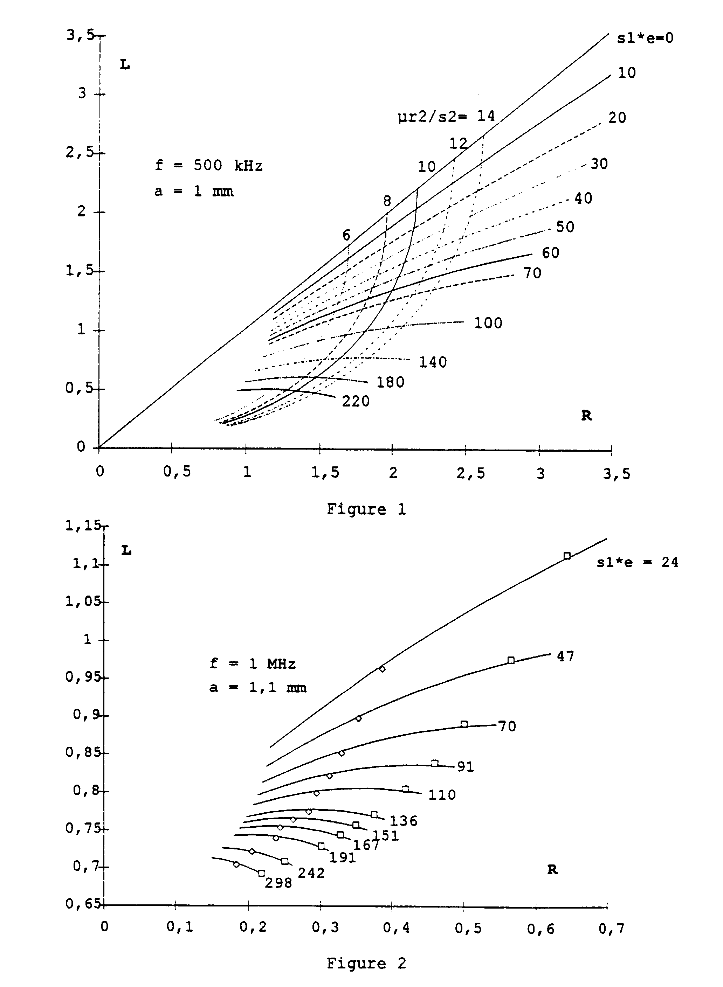

L'exploitation des relations (5) et (6) permet d'établir pour chaque système de valeur des paramètres $S_1$, $S_2$, a, f, un abaque comme celui qui est présentée à titre d'exemple non limitatif à la figure 1 qui permet de déterminer les valeurs respectives des 2 variables e*$\sigma_1$ et $\mu_{r2}/\sigma_2$. La figure 1 est relative au cas ou la bobine est une nappe de courant circulaire épousant exactement la surface extérieur du fil galvanisé.

En pratique, pour exploiter la mesure d'impédance complexe réalisée à une fréquence fixée suffisamment élevée pour que les propriétés intéressantes décrites existent, il suffira de rechercher quelle courbe e*$\sigma_1$=constante passe par le point ayant les coordonnées **L** et **R** du point représentatif dans le diagramme d'impédance normalisé correspondant. Cette recherche pourra se faire sur des abaques mises en mémoire où par calcul direct sur les équations du modèle. On obtiendra ainsi les valeurs respectives du produit e*$\sigma_1$ et du rapport $\mu_{r2}/\sigma_2$. La valeur de l'épaisseur e se déduit de la connaissance du produit e*$\sigma_1$ en y introduisant la conductivité $\sigma_1$ supposée connue.

Il convient de noter que selon une forme d'exécution préférée les mesures sont avantageusement effectuées à l'aide d'un solénoïde long présentant une seule couche de spires. Dans ce cas, les mesures sont en effet moins sensible aux effets de vibration et de centrage.

**Brève description des figures.**

| La figure 1 | représente l'abaque théorique qui permet à partir de la mesure d'impédance complexe effectuée à une fréquence fixe, de déterminer le produit de l'épaisseur e*$\sigma_1$ pour la couche de recouvrement. |
| La figure 2 | représente les courbes théoriques e*$\sigma_1$=constante et les valeurs expérimentales correspondantes, d'une part dans le cas sans aimantation et d'autre part dans le cas d'une aimantation axiale uniforme par un champ magnétisant. |
| La figure 3 | représente l'abaque expérimental obtenu à une fréquence fixe pour une géométrie fixée en effectuant une série de mesures avec une aimantation croissante. |
| La figure 4 | représente le résultat des mesures par courants de Foucault sur deux familles de fils dont les rugosités sont différentes. |
| La figure 5 | représente le résultats des mesures par courants de Foucault de l'épaisseur de la couche interne de zinc de tubes galvanisés à chaud. |
| La figure 6 | représente la mesure de l'épaisseur de la couche de galvanisation sur 21 fils galvanisés par électrodéposition dans le même bain. |
| La figure 7 | représente la comparaison entre la mesure électromagnétique de e*$\sigma_1$ et l'épaisseur réelle e dans le cas de feuilles d'aluminium de 11 $\mu$m, superposée sur un substrat conducteur plan ferromagnétique. |

**Description de plusieurs formes d'exécution préférées de la présente invention.**

La solution déduite des équations de Dodd et Deeds, présentée à la figure 1, se prête à une vérification expérimentale que nous allons présenter ci-dessous.

La figure 2 est relative aux mesures réalisées à 1 MHz sur 11 fils électro-zingués d'un diamètre de 2,2 mm, recouverts d'une couche de zinc allant de 2,8 $\mu$m à 21,1 $\mu$m. Les 11 fils galvanisés ont fait l'objet d'une mesure dans deux états, tout d'abord, sous une aimantation nulle (carrés) et, ensuite, sous une aimantation axiale uniforme de 3330 A/m (losanges). Les résultats des mesures sont repris au tableau 1 et ont permis d'établir le diagramme de la figure 2. On observe que la variation de perméabilité $\mu_{r2}$ causée par l'aimantation des fils galvanisés, provoque un déplacement important des points dans le diagramme normalisé d'impédance, mais que ce déplacement se fait bien le long de la courbe suivant laquelle la théorie prévoit qu'à partir d'une certaine fréquence il doit se produire. En joignant les points correspondant aux mesures réalisées sans aimantation et en joignant les points correspondant aux mesures réalisées avec aimantation, on obtient deux courbes approchant les courbes théoriques $\mu_{r2}/\sigma_2$ = constante, ce qui permet également de déterminer ce rapport sur l'abaque.

Le résultat de cette expérience avec les mêmes fils dans l'état de réception (non aimanté) et dans l'état aimanté, est la preuve de l'exactitude de la théorie et des abaques qui en sont déduites. Cette expérience démontrent de plus que tant **L** que **R** ne sont pas en relation univoque avec l'épaisseur de la couche de recouvrement. C'est leur combinaison réalisée dans l'abaque qui est en relation univoque avec l'épaisseur de couche.

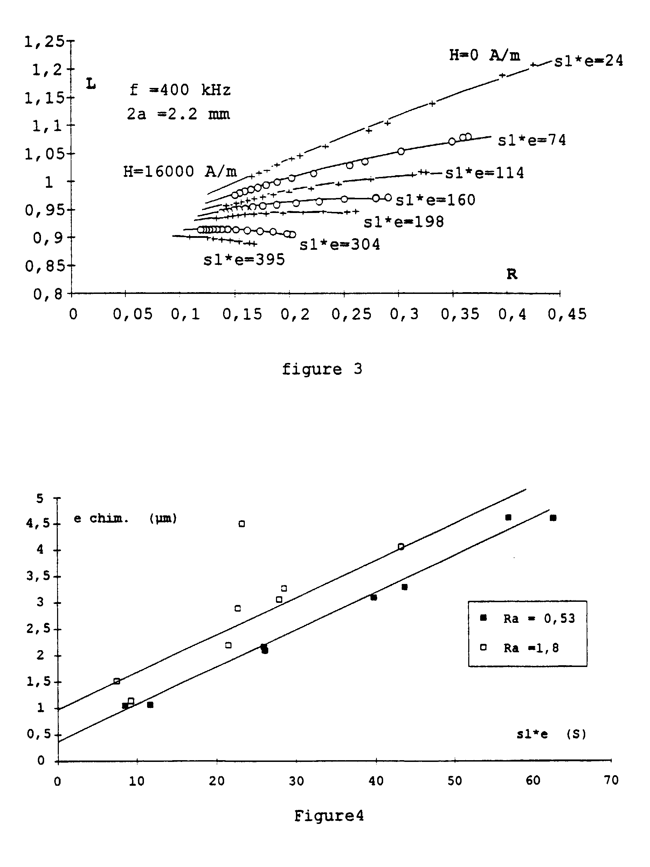

La figure 3 représente un abaque expérimental obtenu directement à partir d'une série de mesures effectuées pour une géométrie fixée, c'est à dire dans le cas de l'exemple, pour un seul solénoïde et un diamètre de fil bien défini. Cet abaque expérimental est obtenu en aimantant progressivement des fils électrogalvanisés soumis à la mesure et en reportant les points correspondant aux mesures successives dans le diagramme d'impédance normalisé. La valeur du paramètre $e^*\sigma_1$ caractérisant chaque courbe de l'abaque est obtenu en multipliant l'épaisseur e connue par la conductivité $\sigma_1$ du zinc déposé. Les différentes courbes de l'abaque ont été déterminées par une régression polynomiale. Cet abaque relatif à une fréquence déterminée peut être utilisé avec la même bobine pour déterminer la valeur du produit $e^*\sigma_1$ de fils de même diamètre recouvert électrolytiquement quelles que soit les conductivités $\sigma_1$ de la couche conductrice et $\sigma_2$ du substrat ferromagnétique ainsi que la perméabilité $\mu_{r2}$ de ce dernier.

Nous avons également découvert par voie expérimentale que l'interprétation des mesures demande de tenir compte de la rugosité du fil d'âme. Il devrait exister une relation proportionnelle entre l'épaisseur de la couche de zinc déterminée par voie chimique et le produit $e^*\sigma_1$ déterminé par courants de Foucault. En fait, la relation est linéaire sans être proportionnelle. Dans un diagramme où l'ordonnée est l'épaisseur e déterminée par voie chimique et l'abs-cisse, le produit $e^*\sigma_1$ déterminé par courants de Foucault, l'ordonnée à l'origine n'est pas nulle, mais a une valeur qui peut être de l'ordre du micron ou de la fraction de micron. Les expériences sur des fils électrozingués que nous allons présenter ci-dessous, permettent d'attribuer dans ce cas cet écart par rapport à la proportionnalité, à la rugosité $R_a$ du fil d'âme. La théorie suppose que les trajectoires des courants de Foucault soient circulaires dans le cas d'un fil d'âme de section droite circulaire. En fait, à cause de la rugosité du fil d'âme, ces hypothèses ne sont qu'imparfaitement vérifiées et l'on doit donc s'attendre à ce que l'épaisseur déterminée par voie chimique qui prend en compte tout le zinc recouvrant le fil d'âme soit un peu plus grande que l'épaisseur déterminée par courants de Foucault. En effet, le zinc qui se trouve dans les creux du relief de la surface du fil d'âme n'est pratiquement pas décelé par courants de Foucault. Pour mettre en évidence expérimentalement, l'effet de la rugosité, deux familles de fils recouverts d'une peau de zinc par électrodéposition présentant des rugosités très différentes du fil d'âme, ont été. La rugosité moyenne $R_a$ de la première famille vaut $0.53\,\mu m$ tandis que celle de la seconde famille vaut $1.8\,\mu m$. Les résultats des mesures réalisées à 1 MHz sur ces deux familles de fils galvanisés, sont présentés sur la figure 4. On observe que l'ordonnée à l'origine augmente avec la valeur de $R_a$. La relation linéaire expérimentale tenant compte de la rugosité entre l'épaisseur de la couche de zinc $e_{chim}$ déterminée par voie chimique et le produit $e^*\sigma_1$ déterminé par courants de Foucault est donnée ci-dessous:

$$e_{chim} = \frac{\sigma_1{}^*e}{14.949^*10^6} + \frac{R_a}{2} \tag{7}$$

$e_{chim}$, e et $R_a$ en mètre
$\sigma_1$ en S/m

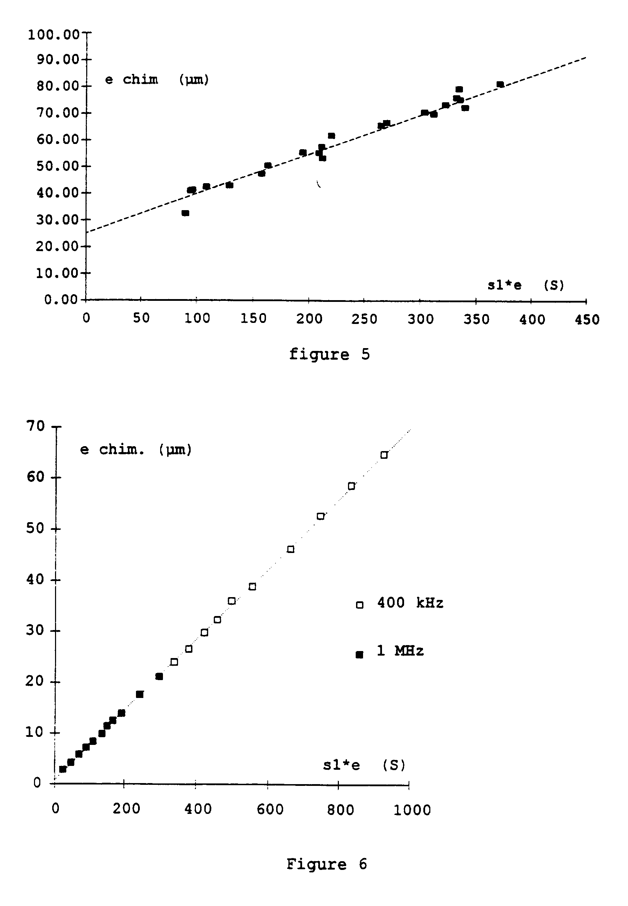

Dans le cas de la présence d'une couche intermédiaire d'alliage intermétallique entre le substrat ferromagnétique et la couche de recouvrement non ferromagnétique, on observe, ainsi qu'on peut le voir sur la figure 5, une valeur plus élevée de l'ordonnée à l'origine ce qui est en relation avec la présence et l'épaisseur de cette couche intermétallique.

La figure 6 a trait aux résultats de mesure de l'épaisseur de la couche de galvanisation sur 21 fils galvanisés par électrodéposition dans le même bain. Elle illustre la relation linéaire entre l'épaisseur chimique e chim de la couche de zinc et le produit $e^*\sigma_1$ déterminé par courants de Foucault. On a vérifié expérimentalement que la méthode de mesure est applicable tant pour de très fines épaisseurs (par exemple 0,5 $\mu m$) que pour des épaisseurs nettement plus importantes (par exemple 1 mm)

Les mesures électromagnétiques sur les couches très minces ont été réalisées à la fréquence de 1 MHz, tandis que les mesures sur les couches plus épaisses ont été réalisées à la fréquence de 400 kHz. On observe, dans la figure 5, une relation linéaire conforme à la relation suivante, où apparaît une rugosité apparente de 1,6 $\mu m$.

$$e_{chim} = \frac{\sigma_1 * e}{14.949*10^6} + \frac{1.6*10^{-6}}{2} \qquad (8)$$

Ainsi que nous l'avons montré plus haut, le fait d'aimanter les fils galvanisés produit un déplacement très important du point correspondant à la mesure dans le diagramme d'impédance normalisé. Néanmoins, comme le montre le tableau 1 relatif aux résultats des mesures, l'aimantation des fils galvanisés, ne fait pratiquement pas varier la valeur du produit e*$\sigma_1$ déterminé par courants de Foucault.

Il est donc possible de déterminer de manière absolue c'est à dire sans étalonnage le produit de l'épaisseur e de la couche de zinc par la conductivité du zinc soit e*$\sigma_1$ ainsi que le rapport entre la perméabilité relative $\mu_{r2}$ du fil d'âme et sa conductivité $\sigma_2$ soit $\mu_{r2}/\sigma_2$. On ne doit donc pas connaître la conductivité $\sigma_2$ et la perméabilité relative $\mu_{r2}$ du fil d'âme en acier. Ce point est très important car on ne connaît jamais à l'avance ces grandeurs. Il permet l'application industrielle du procédé. On doit de plus faire remarquer que l'expérience en usine dans le cas de fils galvanisés a montré que la mesure n'est pratiquement pas influencé par le défilement du produit, par la vitesse et les variations de vitesse de défilement et le décentrage du fil dans la bobine de mesure. On a pu également observer une quasi insensibilité de la mesure aux variations pratiques de diamètre du fil d'âmes vis à vis du diamètre nominal. On peut ainsi déterminer l'épaisseur e de la couche avec une précision de quelques dixièmes de microns pourvu que l'on connaisse la conductivité du métal conducteur non ferromagnétique de la couche de recouvrement.

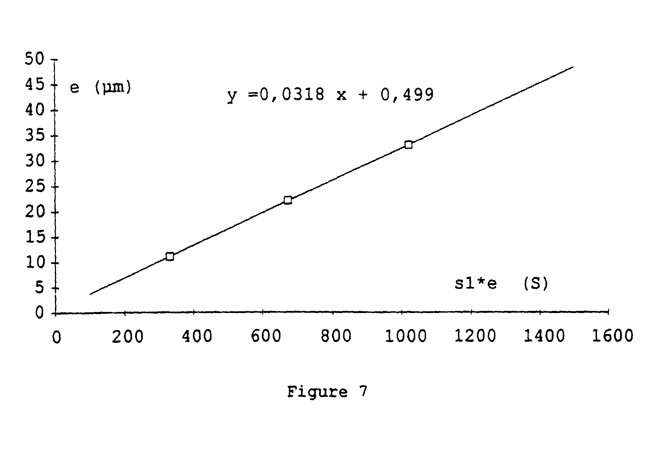

La figure 7 est relative à des résultats expérimentaux obtenus en recouvrant une tôle d'acier de 1 mm d'épaisseur avec 1, 2 et 3 feuilles d'aluminium ayant chacune 11 $\mu$m d'épaisseur. La figure 7 représente la relation linéaire entre l'épaisseur e de la couche de recouvrement en aluminium et le produit e*$\sigma_1$ déterminé par courants de Foucault en réalisant la mesure à l'aide d'une excitation réalisée par une bobine plane spiralée.

La question de l'effet d'une aimantation sur le résultat de la mesure est une question délicate. Nous avons pu observer que l'aimantation des fils électrozingués de 2,2 mm de diamètre n'avait pas d'effet sur la valeur du produit e*$\sigma_1$ par le procédé du brevet bien que cette aimantation augmente fortement la perméabilité du fil d'âme en acier. Des essais réalisés sur des fils d'un diamètre de 5,5 mm ont par contre montré l'apparition d'un léger effet de l'aimantation du produit. L'interprétation que nous donnons de ces effets qui ne sont pas prévus par le modèle développé, est qu'il s'agit d'un effet d'hystérésis. En effet, le modèle physique que nous avons exploité, est basé sur la forme des équations de Maxwell applicable au cas des milieux conducteurs homogènes, isotropes et linéaires. Le modèle ne recouvre donc pas les pertes par hystérésis qui viennent augmenter l'énergie dissipée. Lorsque les effets attribués à l'hystérésis affectent la mesure d'une façon exagérée en regard de la précision attendue, on aura avantage à procéder à une aimantation du produit pendant la mesure par des aimants ou par une bobine adéquate.

Nous avons donc découvert en analysant les propriétés physiques cachées de nappes de courant cylindriques et de bobines planes spiralées, qu'à suffisamment haute fréquence, l'impédance complexe **Z** d'une bobine qui crée des courants de Foucault dans un objet fait dans un matériau conducteur ferromagnétique et recouvert d'une couche de recouvrement d'un matériau conducteur non ferromagnétique, est une fonction de la géométrie du système bobine + produit, de la fréquence et des variables e*$\sigma_1$ et $\mu_{r2}/\sigma_2$ comme l'indiquent les deux formules suivantes :

L = fonction (géométrie du système "bobine + produit",

f, e, e*$\sigma_1$, $\mu_{r2}/\sigma_2$) \qquad (9)

R = fonction (géométrie du système "bobine + produit",

f, e*$\sigma_1$, $\mu_{r2}/\sigma_2$) \qquad (10)

Ces propriétés remarquables sont liées au skin-effect dans un substrat conducteur ferromagnétique recouvert d'une couche d'un revêtement en matériau conducteur non ferromagnétique.

On peut donc généraliser les propriétés remarquables synthétisées dans les relations (9) et (10), au cas général d'une bobine quelconque au voisinage d'un produit de forme quelconque en matériau ferromagnétique recouvert d'une couche de revêtement conducteur non ferromagnétique.

L'expérience nous a cependant montré la possibilité d'appliquer le procédé de l'invention à la mesure de l'épaisseur de couche d'un revêtement conducteur ferromagnétique tel le nickel sur un substrat conducteur ferromagnétique tel l'acier tout en obtenant une précision suffisante pour le besoin industriel. Néanmoins, dans ce cas particulier, le procédé fournit une grandeur proportionnelle à l'épaisseur de couche, le coefficient de proportionnalité n'étant plus la conductivité électrique du matériau de revêtement. Néanmoins, la mesure conserve, dans ce cas, la propriété de ne pas être influencée par une variation de la conductivité et/ou de la perméabilité du substrat ferromagnétique.

Dans ce qui précède, nous avons décrit les propriétés remarquables d'une bobine de mesure parcourue par un courant alternatif, située au voisinage d'un objet constitué d'un substrat en matériau conducteur ferromagnétique recouvert d'une couche de revêtement en matériau conducteur non ferromagnétique.

Il est avantageux dans la mise en oeuvre de l'invention de concevoir des bobines d'excitation au voisinage desquels le champ **H** est le plus uniforme possible et il est également avantageux de disposer le détecteur dans une zone voisine de l'objet conducteur où le champ **H** est le plus uniforme possible.

Le courant d'excitation de la bobine inducteur ne peut pas être un courant continu. Ce doit être un courant variable comme par exemple et sans volonté de limitation, un courant impulsionnel, un courant périodique sinusoïdal ou rectangulaire ou triangulaire.

Le détecteur peut être la bobine inductrice comme dans les exemples présentés plus haut. Il peut consister en une seconde bobine indépendante de l'inducteur. Il peut être constitué par n'importe quel dispositif qui est sensible à la variation temporelle du flux dans au moins une surface de détection bornée. Il est avantageux de réaliser la détection par une bobine différente de la bobine d'excitation car on peut ainsi s'affranchir des effets de la température sur la résistance électrique des fils constitutifs des bobines.

La fréquence minimale de la partie utile du champ magnétique variable produit par l'inducteur est choisie telle qu'à partir de cette fréquence, pour une fréquence fixe, pour une géométrie inducteur-objet-détecteur déterminée et pour toutes les valeurs vraisemblables de conductivité et de perméabilité du substrat comme paramètres variables, la surface comprise entre les deux courbes extrêmes de la famille de courbes ayant une valeur du produit conductivité de couche fois épaisseur de couche comme paramètre fixe et la surface comprise entre les deux courbes extrêmes d'une autre famille de courbes ayant une autre valeur du paramètre fixe, différant de la valeur précédente de l'écart caractérisant la précision souhaitée de mesure de l'épaisseur de couche, ne se recouvrent pas dans la zone de l'abaque exploitée pour les mesures.

La fréquence maximale de la partie utile du champ magnétique variable produit par l'inducteur est choisie telle que de la fréquence minimale jusqu'à cette fréquence maximale, pour une fréquence fixe, pour une géométrie inducteur-objet-détecteur déterminée et pour toutes les valeurs vraisemblables de conductivité et de perméabilité du substrat comme paramètres variables, la surface comprise entre les deux courbes extrêmes de la famille de courbes ayant une valeur du produit conductivité de couche fois épaisseur de couche comme paramètre fixe et la surface comprise entre les deux courbes extrêmes d'une autre famille de courbes ayant une autre valeur du paramètre fixe différant de la valeur précédente de l'écart résultant des incertitudes affectant les mesures des deux grandeurs, ne se recouvrent pas dans la zone de l'abaque exploitée pour les mesures.

Une application particulièrement avantageuse de l'invention consiste en la mesure on line de l'épaisseur de la couche de zinc ou de laiton dans le cas de fil d'acier recouverts par voie électrolytique ou par trempage à chaud, se trouve dans le procédé et/ou l'installation applicable aux fils d'âme d'acier d'un diamètre allant de 0.1 mm à 10 mm par exemple. L'application du procédé et/ ou de l'installation de l'invention est particulièrement intéressante dans le cas de très faible épaisseur de zinc ou alliage de zinc comme le laiton, telle une épaisseur de un micromètre par exemple ainsi que dans les cas où une très grande précision est demandée telle une précision de de l'ordre de deux centièmes de micron pour une couche de zinc ou de laiton d'une épaisseur de un micron.

| N° | e chim μm | $\sigma_1 *e$ S | $\mu_{r2}/\sigma_2$ m/ MS | e cour. Fouc. μm | écart μm | $\sigma_1 *e$ S | $\mu_{r2}/\sigma_2$ m/ MS | e cour. Fouc. μm | écart μm |
|---|---|---|---|---|---|---|---|---|---|
| | | mesure avant aimantation | | | | mesure sous aimantation H=3300 A/m | | | |
| 0 | 2,8 | 24,2 | 17,8 | 2,47 | 0,33 | 27,02 | 6,20 | 2,67 | 0,13 |
| 1 | 4,2 | 47,0 | 16,5 | 4,05 | 0,15 | 49,62 | 5,71 | 4,23 | -0,03 |
| 2 | 5,8 | 70,2 | 16,4 | 5,65 | 0,15 | 74,00 | 5,56 | 5,91 | -0,11 |
| 3 | 7,2 | 90,9 | 17,3 | 7,07 | 0,13 | 94,99 | 5,65 | 7,36 | -0,16 |
| 4 | 8,4 | 110,1 | 17,0 | 8,40 | 0,00 | 115,1 | 5,61 | 8,74 | -0,34 |
| 5 | 9,8 | 136,2 | 17,5 | 10,20 | -0,4 | 142,2 | 6,35 | 10,6 | -0,81 |
| 6 | 11,4 | 151,0 | 16,6 | 11,22 | 0,18 | 155,8 | 5,56 | 11,5 | -0,15 |

(suite)

| N° | e chim μm | σ₁*e S | μ_{r2}/σ₂ m/ MS | e cour. Fouc. μm | écart μm | σ₁*e S | μ_{r2}/σ₂ m/ MS | e cour. Fouc. μm | écart μm |
|---|---|---|---|---|---|---|---|---|---|
| | | mesure avant aimantation | | | | mesure sous aimantation H=3300 A/m | | | |
| 7 | 12,5 | 167,3 | 16,7 | 12,34 | 0,16 | 172,6 | 5,09 | 12,7 | -0,21 |
| 8 | 13,9 | 191,0 | 16,9 | 13,98 | -0,1 | 197,7 | 5,92 | 14,4 | -0,54 |
| 9 | 17,6 | 242,5 | 15,7 | 17,54 | 0,06 | 245,2 | 5,25 | 17,7 | -0,12 |
| 10 | 21,1 | 298,2 | 18,6 | 21,38 | -0,3 | 305,9 | 6,00 | 21,9 | -0,81 |

**Revendications**

1. Procédé applicable à un objet constitué d'un substrat en matériau conducteur électrique ferromagnétique recouvert d'une couche d'un revêtement conducteur électrique non ferromagnétique pour mesurer le produit conductivité de couche fois épaisseur de couche, consistant à placer au moins un inducteur produisant un champ magnétique variable dans un espace avoisinant l'objet, à mesurer au travers d'un détecteur constitué d'au moins une surface de détection bornée, deux grandeurs proportionnelles aux parties de la dérivée temporelle du flux magnétique créé dans la surface de détection concomitamment par l'inducteur et par l'objet, en phase et en quadrature avec un signal électrique de référence, à exploiter concomitamment deux fonctions différentes de ces deux mesures en définissant un point expérimental en prenant ces deux fonctions comme les deux grandeurs d'entrée d'un premier abaque qui ne peut pas être réduit à un abaque équivalent à une seule entrée, qui est indépendant de la conductivité de la couche et de la conductivité et de la perméabilité du substrat, mais dépendant des caractéristiques du système inducteur-objet-détecteur, du champ magnétique variable produit par l'inducteur, ledit abaque est constitué d'un réseau de courbes non sécantes correspondant chacune à une valeur différente du produit conductivité de couche fois épaisseur de couche et à déterminer sur l'abaque laquelle parmi ces courbes passe par le point correspondant à la mesure et d'en déduire la valeur du produit conductivité de couche fois épaisseur de couche.

2. Procédé selon la revendication 1 caractérisé en ce que la position du point expérimental dans un second abaque à deux entrées est aussi utilisée pour déterminer le quotient conductivité du substrat sur perméabilité du substrat en exploitant ce second abaque à deux entrées superposé au premier abaque qui ne peut pas être réduit à un abaque équivalent à une seule entrée, qui est constitué d'un second réseau de courbes non sécantes correspondant chacune à une valeur différente dudit quotient, qui est indépendant de la conductivité de la couche et de la conductivité et de la perméabilité du substrat mais dépendant de la géométrie particulière de chaque système inducteur-objet-détecteur et à déterminer sur le second abaque laquelle parmi ces courbes passe par le point correspondant à la mesure et d'en déduire la valeur du quotient perméabilité du substrat sur conductivité du substrat.

3. Procédé selon la revendication 1 ou 2 caractérisé en ce que l'inducteur est une bobine d'excitation.

4. Procédé selon la revendication 3 caractérisé en ce que la bobine d'excitation est immobile dans l'espace avoisinant l'objet conducteur et est alimentée en courant variable.

5. Procédé selon la revendication 4 caractérisé en ce que le courant variable est un courant alternatif de fréquence fixe.

6. Procédé selon suivant la revendication 5 caractérisé en ce que le courant alternatif est sinusoïdal.

7. Procédé selon la revendication 4 en ce que le courant variable est un courant impulsionnel.

8. Procédé selon l'une quelconque des revendications 4 à 6 caractérisé en ce que les deux grandeurs mesurées sont deux composantes indépendantes de l'impédance complexe de la bobine d'excitation situé dans l'espace avoisinant l'objet à la fréquence du courant d'excitation.

9. Procédé selon l'une quelconque des revendications précédentes, caractérisé en ce que la fréquence minimale de la partie utile du champ magnétique variable produit par l'inducteur est choisie telle qu'à partir de cette fréquence, pour une fréquence fixe, pour une géométrie inducteur-objet-détecteur déterminée et pour toutes les valeurs vraisemblables de conductivité et de perméabilité du substrat comme paramètres variables, la surface comprise entre les deux courbes extrêmes de la famille de courbes ayant une valeur du produit conductivité de couche fois épaisseur de couche comme paramètre fixe et la surface comprise entre les deux courbes extrêmes d'une autre famille de courbes ayant une autre valeur du paramètre fixe, différant de la valeur précédente de l'écart caractérisant la précision souhaitée de mesure de l'épaisseur de couche, ne se recouvrent pas dans la zone de l'abaque exploitée pour les mesures.

10. Procédé selon la revendication 9, caractérisé en ce que la fréquence maximale de la partie utile du champ magnétique variable produit par l'inducteur est choisie telle que de la fréquence minimale jusqu'à cette fréquence maximale, pour une fréquence fixe, pour une géométrie inducteur-objet-détecteur déterminée et pour toutes les valeurs vraisemblables de conductivité et de perméabilité du substrat comme paramètres variables, la surface comprise entre les deux courbes extrêmes de la famille de courbes ayant une valeur du produit conductivité de couche fois épaisseur de couche comme paramètre fixe et la surface comprise entre les deux courbes extrêmes d'une autre famille de courbes ayant une autre valeur du paramètre fixe différant de la valeur précédente de l'écart résultant des incertitudes affectant les mesures des deux grandeurs, ne se recouvrent pas dans la zone de l'abaque exploitée pour les mesures.

11. Procédé selon l'une quelconque des revendications précédente caractérisé en ce que les deux grandeurs mesurées sont proportionnelles à l'amplitude et à la phase du signal fourni par le détecteur vis à vis d'un signal électrique de référence.

12. Procédé selon l'une quelconque des revendications précédentes, caractérisé en ce que pendant la mesure, l'objet est soumise à un champ magnétique invariable.

13. Procédé selon l'une quelconque des revendications précédentes, caractérisé en ce qu'il s'effectue en temps réel.

14. Procédé selon l'une quelconque des revendications précédentes, caractérisé en ce que le détecteur est constitué d'une bobine d'au moins une spire.

15. Installation pour mesurer l'épaisseur d'une couche en matériau conducteur non ferromagnétique sur un objet constitué d'un substrat en matériau conducteur ferromagnétique, ledit objet défilant de manière continue au voisinage/à travers un dispositif de mesure comprenant un inducteur produisant un champ magnétique variable dans un espace avoisinant l'objet, un système de détection comprenant un détecteur constitué d'au moins une surface de détection bornée, l'inducteur et/ou le système de détection étant connecté à un ordinateur programmé à réaliser le procédé de mesure selon l'une quelconque des revendications précédentes.

16. Utilisation du procédé et/ou de l'installation selon l'une quelconque des revendications précédentes en vue de mesurer l'épaisseur d'une couche d'un revêtement en matériau conducteur non ferromagnétique, telle qu'un revêtement d'étain, de laiton, de zinc, d'or ou d'argent sur un objet constitué d'un substrat en matériau conducteur ferromagnétique de préférence choisi parmi le groupe constitué par un fil, une tôle, un tube, un profilé, un produit plat ou encore tout objet limité par une surface cylindrique ou par une surface plane.

17. Utilisation du procédé et/ou de l'installation suivant les revendications 1 à 15 pour déterminer la rugosité du substrat en comparant la valeur conductivité fois épaisseur de couche à une mesure chimique de l'épaisseur de la couche en matériau conducteur non ferromagnétique.

18. Utilisation du procédé et/ou de l'installation selon les revendications 1 à 15 pour déterminer l'épaisseur de la couche d'alliage intermétallique séparant le substrat de la couche en matériau conducteur non ferromagnétique en comparant la valeur conductivité fois épaisseur de couche à une mesure chimique de l'épaisseur de la couche en matériau conducteur non ferromagnétique.

## Patentansprüche

1. Verfahren, das bei einem Objekt aus einem ferromagnetischen, elektrisch leitenden Material, das mit einer Schicht aus einem nicht-ferromagnetischen, elektrisch leitenden Material überzogen ist, angewandt werden kann, um das Produkt Schichtleitfähigkeit mal Schichtdicke zu messen, und das darin besteht, daß mindestens eine Erregungsspule, die ein variables Magnetfeld erzeugt, in einem an das Produkt angrenzenden Raum angeordnet wird, über einen aus mindestens einer begrenzten Erfassungsoberfläche bestehenden Sensor zwei Größen, die proportional zu den Teilen der zeitlichen Ableitung des in der Erfassungsoberfläche von der Erregerwicklung und dem Produkt gleichzeitig erzeugten Magnetflusses sind, in Phase und mit 90° Phasenverschiebung bezüglich eines elektrischen Bezugssignals gemessen werden, gleichzeitig zwei verschiedene Funktionen dieser zwei Messungen ausgenutzt werden, indem ein experimenteller Punkt definiert wird, wozu diese zwei Funktionen als die zwei Eingangsgrößen eines ersten Abakus genommen werden, der nicht auf einen Abakus, der einem einzigen Eingang entspricht, reduziert werden kann, und der unabhängig von der Leitfähigkeit der Schicht, und der Leitfähigkeit und der Permeabilität des Substrats, aber abhängig von den Eigenschaften des Systems Erregerwicklung-Objekt-Sensor und dem von der Erregerwicklung erzeugten, variablen Magnetfeld ist, wobei der Abakus aus einem Netz von sich nicht schneidenden Kurven besteht, von denen jede einem verschiedenen Wert des Produktes Schichtleitfähigkeit mal Schichtdicke entspricht, und daß bei dem Abakus bestimmt wird, welche dieser Kurven durch den Punkt geht, der der Messung entspricht, und daraus der Wert des Produktes Schichtleitfähigkeit mal Schichtdicke abgeleitet wird.

2.  Verfahren gemäß Anspruch 1, dadurch gekennzeichnet, daß die Position des experimentellen Punktes bei einem zweiten Abakus mit zwei Eingängen auch verwendet wird, um den Quotienten Leitfähigkeit des Substrats durch Permeabilität des Substrats zu bestimmen, wozu dieser dem ersten Abakus überlagerte, zweite Abakus mit zwei Eingängen, der nicht auf einen Abakus, der einem einzigen Eingang entspricht, reduziert werden kann, und der aus einem zweiten Netz von sich nicht schneidenden Kurven besteht, von denen jede einem verschiedenen Wert des Quotienten entspricht, und der unabhängig von der Leitfähigkeit der Schicht, und von der Leitfähigkeit und der Permeabilität des Substrats, aber abhängig von der speziellen Geometrie jedes Erregerwicklungs-Objekt-Sensor-Systems ist, ausgenutzt wird, und bei dem zweiten Abakus bestimmt wird, welche dieser Kurven durch den der Messung entsprechenden Punkt geht, und daraus der Wert des Quotienten Permeabilität des Substrats durch Leitfähigkeit des Substrats abgeleitet wird.

3.  Verfahren gemäß Anspruch 1 oder 2, dadurch gekennzeichnet, daß die Erregerwicklung eine Erregungsspule ist.

4.  Verfahren gemäß Anspruch 3, dadurch gekennzeichnet, daß die Erregungsspule in dem an das leitende Objekt angrenzenden Raum unbeweglich ist und mit einem variablen Strom gespeist wird.

5.  Verfahren gemäß Anspruch 4, dadurch gekennzeichnet, daß der variable Strom ein Wechselstrom mit einer festen Frequenz ist.

6.  Verfahren gemäß Anspruch 5, dadurch gekennzeichnet, daß der Wechselstrom sinusförmig ist.

7.  Verfahren gemäß Anspruch 4, dadurch gekennzeichnet, daß der variable Strom ein Impulsstrom ist.

8.  Verfahren gemäß irgendeinem der Ansprüche 4 bis 6, dadurch gekennzeichnet, daß die zwei gemessenen Größen zwei Komponenten sind, die bei der Frequenz des Erregungsstromes unabhängig von der komplexen Impedanz der in dem an das Objekt angrenzenden Raum angeordneten Erregungsspule sind.

9.  Verfahren gemäß irgendeinem der vorhergehenden Ansprüche, dadurch gekennzeichnet, daß die minimale Frequenz des nutzbaren Teils des von der Erregerwicklung erzeugten, variablen Magnetfeldes so gewählt wird, daß ab dieser Frequenz für eine feste Frequenz, für eine festgelegte Erregerwicklungs-Objekt-Sensor-Geometrie, und für alle wahrscheinlichen Leitfähigkeits- und Permeabilitätswerte des Substrats als variable Parameter, die Oberfläche zwischen den zwei extremen Kurven der Familie von Kurven, die einen Wert des Produktes Schichtleitfähigkeit mal Schichtdicke als festen Parameter haben, und die Oberfläche zwischen den zwei extremen Kurven einer anderen Familie, die einen anderen Wert des festen Parameters haben, der sich von dem vorhergehenden Wert um die Abweichung unterscheidet, die die gewünschte Genauigkeit bei der Messung der Schichtdicke kennzeichnet, sich in der für die Messungen benutzten Zone des Abakus nicht überdecken.

10. Verfahren gemäß Anspruch 9, dadurch gekennzeichnet, daß die maximale Frequenz des nutzbaren Teils des von der Erregerwicklung erzeugten, variablen Magnetfeldes so gewählt wird, daß von der minimalen Frequenz bis zu dieser maximalen Frequenz, für eine feste Frequenz, für eine festgelegte Erregerwicklungs-Objekt-Sensor-Geometrie, und für alle wahrscheinlichen Leitfähigkeits- und Permeabilitätswerte des Substrats als variable Parameter, die Oberfläche zwischen den zwei extremen Kurven der Familie von Kurven, die einen Wert des Produktes Schichtleitfähigkeit mal Schichtdicke als festen Parameter haben, und die Oberfläche zwischen den zwei extremen Kurven einer anderen Familie von Kurven, die einen anderen Wert des festen Parameters haben, der sich von dem vorhergehenden Wert um die Abweichung unterscheidet, die sich aus den Unsicherheiten ergibt, die mit den Messungen der zwei Größen verbunden sind, sich in der für die Messungen benutzten Zone des Abakus nicht überdecken.

11. Verfahren gemäß irgendeinem der vorhergehenden Ansprüche, dadurch gekennzeichnet, daß die zwei gemessenen Größen proportional zu der Amplitude und der Phase des von dem Sensor gelieferten Signals bezüglich eines elektrischen Bezugssignals sind.

12. Verfahren gemäß irgendeinem der vorhergehenden Ansprüche, dadurch gekennzeichnet, daß das Objekt während der Messung einem invariablen Magnetfeld unterworfen wird.

13. Verfahren gemäß irgendeinem der vorhergehenden Ansprüche, dadurch gekennzeichnet, daß es in Echtzeit ausgeführt wird.

14. Verfahren gemäß irgendeinem der vorhergehenden Ansprüche, dadurch gekennzeichnet, daß der Sensor aus einer Spule mit mindestens einer Windung besteht.

15. Einrichtung, um die Dicke einer Schicht aus einem nicht-ferromagnetischen, leitenden Material zu messen, die auf ein Objekt aufgebracht ist, das aus einem Substrat aus einem ferromagnetischen, leitenden Material besteht, wobei das Objekt kontinuierlich bei/in einer Meßvorrichtung durchläuft, die eine Erregerwicklung aufweist, die ein variables Magnetfeld in einem an das Objekt angrenzenden Raum erzeugt, und ein Erfassungssystem mit mindestens einem aus einer begrenzten Erfassungsebene bestehenden Sensor aufweist, wobei die Erregerwicklung und/oder das Erfassungssystem an einen Computer angeschlossen sind, der programmiert ist, um das Meßverfahren gemäß irgendeinem der vorhergehenden Ansprüche auszuführen.

16. Verwendung des Verfahrens und/oder der Einrichtung gemäß irgendeinem der vorhergehenden Ansprüche, um die Dicke einer Überzugsschicht aus einem nicht-ferromagnetischen, leitenden Material, wie einer Überzugsschicht aus Zinn, Messing, Zink, Gold oder Silber auf einem Objekt zu messen, das aus einem Substrat aus einem ferromagnetischen Material besteht, und das vorzugsweise aus der Gruppe ausgewählt wird, die aus einem Draht, einem Blech, einem Rohr, einem Profil, einem Flachprodukt, oder auch irgendeinem, durch eine zylindrische Oberfläche oder eine ebene Oberfläche begrenzten Objekt besteht.

17. Verwendung des Verfahrens und/oder der Einrichtung gemäß den Ansprüchen 1 bis 15, um die Rauhigkeit des Substrats zu bestimmen, wozu der Wert Leitfähigkeit mal Schichtdicke mit einer chemischen Messung der Dicke der Schicht aus einem nicht-ferromagnetischen, leitenden Material verglichen wird.

18. Verwendung des Verfahrens und/oder der Einrichtung gemäß den Ansprüchen 1 bis 15, um die Dicke der aus einer intermetallischen Legierung bestehenden Schicht zu messen, die das Substrat von der Schicht aus einem nicht-magnetischen, leitenden Material trennt, wozu der Wert Leitfähigkeit mal Schichtdicke mit einer chemischen Messung der Dicke der Schicht aus einem nicht-ferromagnetischen, leitenden Material verglichen wird.

## Claims

1. Method, applicable to an object consisting of a substrate made of ferromagnetic electrically conductive material covered with a layer of a non-ferromagnetic electrically conductive coating, for measuring the product of the layer conductivity times the layer thickness, consisting in placing at least one inductor producing a variable magnetic field in a space neighbouring the object, in measuring, by means of a detector consisting of at least one bounded detection surface, two quantities proportional to the parts of the time derivative of the magnetic flux created in the detection surface concomitantly by the inductor and by the object, in phase and in quadrature with a reference electrical signal, in concomitantly employing two different functions of these two measurements by defining an experimental point by taking these two functions as the two input quantities of a first chart which cannot be reduced to an equivalent chart with a single input, which is independent of the conductivity of the layer and of the conductivity and the permeability of the substrate, but is dependent on the characteristics of the inductor/object/detector system and on the variable magnetic field produced by the inductor, the said chart consisting of a network of non-secant curves which each correspond to a different value of the product of the layer conductivity times the layer thickness, and in determining on the chart which of these curves passes through the point corresponding to the measurement and deducing therefrom the value of the product of the layer conductivity times the layer thickness.

2. Method according to Claim 1, characterized in that the position of the experimental point in a second two-input chart is also used for determining the quotient of the conductivity of the substrate divided by the permeability of the substrate by employing this second two-input chart superposed with the first chart which cannot be reduced to an equivalent chart with a single input, which consists of a second network of non-secant curves which each correspond to a different value of the said quotient, which is independent of the conductivity of the layer and of the conductivity and the permeability of the substrate but is dependent on the particular geometry of each inductor/object/detector system, and in determining on the second chart which of these curves passes through the point corresponding to the measurement and deducing therefrom the value of the quotient of the permeability of the substrate divided by the conductivity of the substrate.

3. Method according to Claim 1 or 2, characterized in that the inductor is an excitation coil.

4. Method according to Claim 3, characterized in that the excitation coil is fixed in the space neighbouring the conductive object and is supplied with variable current.

5. Method according to Claim 4, characterized in that the variable current is a fixed-frequency alternating current.

6. Method according to Claim 5, characterized in that the alternating current is sinusoidal.

7. Method according to Claim 4, characterized in that the variable current is a pulsed current.

8. Method according to any one of Claims 4 to 6, characterized in that the two measured quantities are two independent components of the complex impedance, at the frequency of the excitation current, of the excitation coil located in the space neighbouring the object.

9. Method according to any one of the preceding claims, characterized in that the minimum frequency of the useful part of the variable magnetic field produced by the inductor is chosen such that, above this frequency, for a fixed frequency, for a defined inductor/object/detector geometry and for all the likely values of conductivity and permeability of the substrate as variable parameters, the area contained between the two extreme curves of the family of curves having as fixed parameter a value of the product of the layer conductivity times the layer thickness, and the area contained between the two extreme curves of another family of curves having another value of the fixed parameter, differing from the preceding value by the difference characterizing the desired measurement accuracy for the layer thickness, do not overlap in the region of the chart employed for the measurements.

10. Method according to Claim 9, characterized in that the maximum frequency of the useful part of the variable magnetic field produced by the inductor is chosen such that, from the minimum frequency to this maximum frequency, for a fixed frequency, for a defined inductor/-object/detector geometry and for all the likely values of conductivity and permeability of the substrate as variable parameters, the area contained between the two extreme curves of the family of curves having as fixed parameter a value of the product of the layer conductivity times the layer thickness, and the area contained between the two extreme curves of another family of curves having another value of the fixed parameter, differing from the preceding value by the difference resulting from uncertainties affecting the measurements of the two quantities, do not overlap in the region of the chart employed for the measurements.

11. Method according to any one of the preceding claims, characterized in that the two measured quantities are proportional to the amplitude and the phase of the signal delivered by the detector with respect to a reference electrical signal.

12. Method according to any one of the preceding claims, characterized in that the object is subjected to an invariant magnetic field during the measurement.

13. Method according to any one of the preceding claims, characterized in that it is carried out in realtime.

14. Method according to any one of the preceding claims, characterized in that the detector consists of a coil with at least one turn.

15. Installation for measuring the thickness of a layer of non-ferromagnetic conductive material on an object consisting of a substrate made of ferromagnetic conductive material, the said object moving continuously past/through a measuring device comprising an inductor which produces a variable magnetic field in a space neighbouring the object, a detection system comprising a detector consisting of at least one bounded detection surface, the inductor and/or the detection system being connected to a computer programmed so as to carry out the measurement method according to any one of the preceding claims.

16. Use of the method and/or installation according to any one of the preceding claims with a view to measuring the thickness of a layer of a coating of a non-ferromagnetic conductive material, such as a tin, brass, zinc, gold or silver coating on an object consisting of a substrate made of ferromagnetic conductive material preferably chosen from the group consisting of a wire, a metal sheet, a tube, a section, a flat product or else any object bounded by a cylindrical surface or by a plane surface.

17. Use of the method and/or installation according to Claims 1 to 15 for determining the surface roughness of the substrate by comparing the value of conductivity times thickness of the layer with a chemical measurement of the thickness of the layer of nonferromagnetic conductive material.

18. Use of the method and/or installation according to Claims 1 to 15 for determining the thickness of the intermetallic alloy layer separating the substrate from the layer of non-ferromagnetic conductive material by comparing the value of conductivity times thickness of the layer with a chemical measurement of the thickness of the layer of non-ferromagnetic conductive material.

Figure 1

Figure 2

figure 3

Figure4

figure 5

Figure 6

Figure 7